# DEMANDE DE BREVET EUROPEEN

(11) **EP 1 619 437 A1**
(43) Date de publication de la demande: **25.01.2006**
(21) Numéro de dépôt: 05291567.5
(22) Date de dépôt: 21.07.2005
(51) Int. Cl.: F16L 41/14

(54) **Raccord de piquage**

(30) Priorité: 22.07.2004 FR 0408131
(71) Demandeur: WAVIN B.V., 8011 CW Zwolle (NL)
(72) Inventeur: Gander, Christian, 03200 Le Vernet (FR)
(74) Mandataire: Chameroy, Claude

(57) **Abrégé**

Raccord de piquage pour effectuer une liaison entre une conduite principale (1)et une conduite de dérivation, du type comprenant un corps tubulaire (2) dont une extrémité est destinée à être raccordée à la conduite de dérivation et dont l'autre extrémité est destinée à être insérée dans un orifice de raccordement percé dans la conduite principale (1), ladite extrémité étant pourvue d'une collerette externe (3) pour retenir un joint d'étanchéité annulaire (4), une coquille (5) montée coulissante sur le corps (2) et destinée à venir s'appliquer sur la paroi extérieure de la conduite principale (1), et une bague de serrage (6) vissée sur le corps (2) et agissant sur la coquille (5) pour assurer la compression du joint (4) autour de l'orifice de raccordement percé dans la conduite principale (1), caractérisé en ce que le diamètre extérieur (D1) de l'extrémité du corps tubulaire (2) destinée à être insérée dans l'orifice de raccordement percé dans la conduite principale (1) est au plus égal au diamètre intérieur (D2) de la coquille (5).

## Description

La présente invention concerne un raccord de piquage pour effectuer une liaison entre une conduite principale et une conduite de dérivation, du type comprenant un corps tubulaire dont une extrémité est destinée à être raccordée à la conduite de dérivation et dont l'autre extrémité est destinée à être insérée dans un orifice de raccordement percé dans la conduite principale, ladite extrémité étant pourvue d'une collerette externe pour retenir un joint d'étanchéité annulaire, une coquille montée coulissante sur le corps et destinée à venir s'appliquer sur la paroi extérieure de la conduite principale, et une bague de serrage vissée sur le corps et agissant sur la coquille pour assurer la compression du joint autour de l'orifice de raccordement percé dans la conduite principale.

Dans les raccords connus de ce type, généralement réalisés en matière plastique, le diamètre de la collerette extérieure retenant le joint d'étanchéité est supérieur au diamètre intérieur de la coquille. De ce fait, il est nécessaire, soit de prévoir une coquille en deux parties, soit encore de ne réaliser la collerette extérieure qu'après avoir enfilé la coquille sur le corps. Cependant, ces deux techniques présentent des inconvénients notables.

La première technique implique l'assemblage des deux parties de la coquille lors de l'assemblage en usine du raccord. Or, cet assemblage n'est pas toujours aisé et peut occasionner une mauvaise répartition des efforts de pression pouvant conduire à des ruptures ou à des défauts d'étanchéité, en particulier en cas de diamètre important de la conduite de dérivation. Quant à la seconde technique, elle augmente évidemment de façon sensible le coût du raccord, du fait de la nécessité de réaliser un formage à chaud en reprise, après assemblage des différents composants.

La présente invention a donc pour but principal de remédier à cet inconvénient et, pour ce faire, elle a pour objet un raccord du type susmentionné qui se caractérise essentiellement en ce que le diamètre extérieur de l'extrémité du corps tubulaire destinée à être insérée dans l'orifice de raccordement percé dans la conduite principale est au plus égal au diamètre intérieur de la coquille.

Grâce à cette disposition, il n'est pas nécessaire de prévoir une coquille en deux parties, et la coquille, constituée d'une seule pièce, peut être facilement enfilée sur le corps, sans qu'il soit nécessaire de procéder par la suite à une opération de reprise sur le corps.

Selon une autre caractéristique de l'invention, la coquille est nervurée intérieurement et vient s'appliquer sur le joint par l'intermédiaire de deux nervures annulaires distinctes et espacées l'une de d'autre.

De préférence, la nervure annulaire située le plus à l'intérieur est chanfreinée et applique le joint contre l'arête d'intersection entre la paroi extérieure de la conduite principale et son orifice de raccordement.

De préférence également, le joint d'étanchéité est pourvu, au niveau du point d'appui de la nervure annulaire située le plus à l'extérieur, d'une lèvre venant s'appliquer contre la paroi extérieure de la conduite principale.

Grâce à cet ensemble de dispositions, on obtient une excellente étanchéité en toutes circonstances, et ce quel que soit l'état de surface de la conduite principale.

Selon encore une autre caractéristique, il est prévu au moins une butée pour limiter l'effort de compression exercé sur le joint par la coquille, ceci afin d'éviter son écrasement, ce qui pourrait nuire à l'étanchéité obtenue.

Dans une forme de réalisation particulière, la butée est prévue sur le corps et coopère avec la bague de serrage pour bloquer sa rotation après une course prédéterminée.

Plusieurs formes d'exécution de l'invention sont décrites ci-après à titre d'exemples, en référence aux dessins annexés dans lesquels :
- la figure 1 est une vue en perspective de dessus d'un raccord de piquage conforme à l'invention ;
- la figure 2 est une vue en perspective de dessous de ce raccord de piquage ;
- les figures 3a à 3d sont des vues en coupe illustrant la mise en place du raccord sur la conduite principale ; et
- la figure 4 est une vue en coupe d'une variante de réalisation de l'invention équipée d'une butée de fin de course.

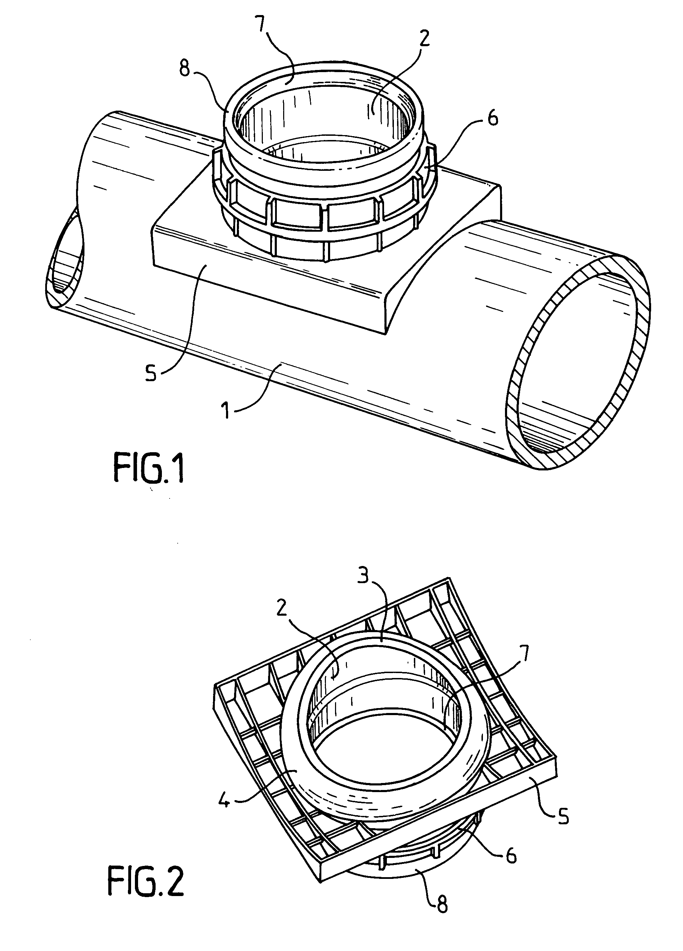

En se référant aux figures 1 et 2, on peut voir un raccord de piquage en matière plastique qui est conçu pour effectuer une liaison entre une conduite principale du genre collecteur, telle que celle représentée partiellement en 1 sur la figure 1, et une conduite de dérivation non représentée ici. Ce raccord est essentiellement constitué d'un corps tubulaire 2 dont une extrémité est destinée à être raccordée à la conduite de dérivation et dont l'autre extrémité est destinée à être insérée dans un orifice de raccordement percé dans la conduite principale 1. Dans la pratique, ce perçage est réalisé sur site, à l'emplacement souhaité, au moyen par exemple d'une scie cloche de diamètre approprié.

De façon connue en soi, l'extrémité du corps insérée dans la conduite principale se termine par une collerette externe 3 retenant un joint d'étanchéité annulaire 4.

L'ensemble est complété par une coquille 5 montée coulissante sur le corps 2 et destinée à venir s'appliquer sur la paroi extérieure de la conduite principale 1, et par une bague de serrage 6 vissée sur le corps 2 et agissant sur la coquille 5 pour assurer la compression du joint 3 autour de l'orifice de raccordement percé dans la conduite principale 1. On notera en outre que du côté de la conduite de dérivation, l'étanchéité est assurée par un joint à lèvre 7, maintenu en place au moyen d'un anneau 8.

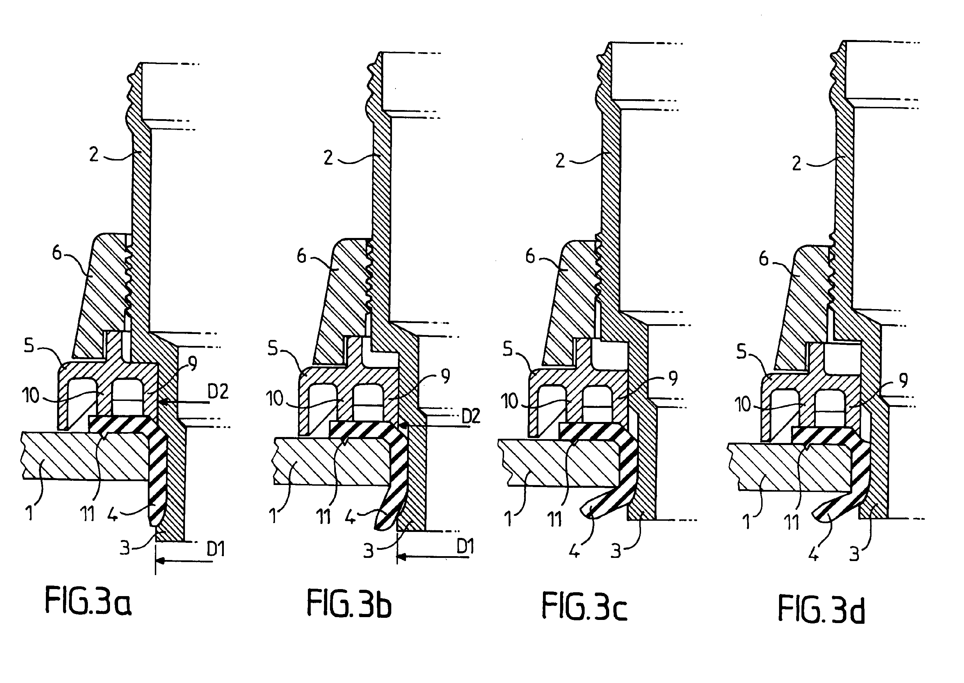

Conformément à l'invention, et ainsi qu'on peut le voir plus clairement sur la figure 3, le diamètre extérieur D1 de l'extrémité du corps 1 destinée à être insérée dans l'orifice de raccordement percé dans la conduite principale 1 est au plus égal au diamètre intérieure D2 de la coquille 5, ou plus précisément légèrement inférieur à celui-ci, si l'on tient compte du jeu fonctionnel nécessaire.

Grâce à cette disposition, la coquille 5 peut être facilement enfilée sur le corps 2, contrairement aux réalisations antérieures qui nécessitaient, soit une coquille en deux parties, soit une reprise ultérieure sur le corps afin de constituer la collerette externe 3.

Ainsi qu'on peut le voir plus clairement sur la figure 2, la coquille 5 est de forme générale rectangulaire et elle est nervurée intérieurement afin de présenter une bonne rigidité. Elle épouse étroitement la surface extérieure de la conduite principale 1 et sa courbure est donc adaptée au diamètre de celle-ci.

Un dispositif anti rotation est en outre prévu pour assurer l'orientation angulaire correcte du corps 2 par rapport à la coquille 5, en tenant compte de l'axe de la conduite principale 1. Ce dispositif peut être constitué, de façon connue en soi, par une ou plusieurs rainures ménagées sur la périphérie intérieure de la coquille 5, dans lesquelles viennent s'engager de manière coulissante une ou plusieurs languettes prévues sur la périphérie extérieure du corps 2.

Selon une autre caractéristique de l'invention, la coquille 5 vient s'appliquer sur le joint 4 par l'intermédiaire de deux nervures annulaires distinctes et espacées l'une de l'autre 9 et 10. La nervure 9 située le plus à l'intérieur est chanfreinée et applique le joint 4 contre l'arête d'intersection entre la paroi extérieure de la conduite principale 1 et son orifice de raccordement. Quant à l'autre nervure 10, elle est plane et prend appui sur l'extrémité du joint qui est pourvu à ce niveau d'une lèvre 11 de section triangulaire qui vient ainsi s'appliquer contre la paroi extérieure de la conduite principale 1.

Avec la compression du joint 4 contre l'arête d'intersection entre la paroi intérieure de la conduite principale 1 et son orifice de perçage sous l'effet du retournement du joint à l'intérieur de la conduite en raison de la remontée de la collerette 3 lors du vissage de l'écrou 6 sur le corps 2, comme illustré sur les figures 3a à 3d, il y a donc en définitive trois niveaux d'étanchéité distincts. Cette disposition permet d'obtenir une excellente étanchéité dans toutes les situations, et même avec des conduites à structure alvéolaire.

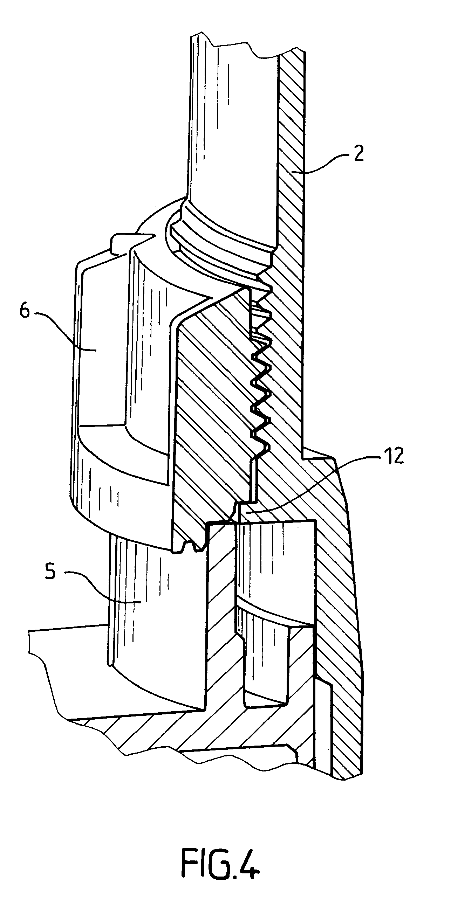

Dans la variante de réalisation illustrée sur la figure 4, on a prévu une butée de fin de course 12 afin de maîtriser la compression du joint 4. Comme on le sait en effet, une compression excessive du joint pourrait nuire à son étanchéité. Dans l'exemple représenté ici, la butée 12 est prévue sur le corps 2 et arrête la rotation de la bague de serrage 6 après une course prédéterminée.

## Revendications

1. Raccord de piquage pour effectuer une liaison entre une conduite principale (1)et une conduite de dérivation, du type comprenant un corps tubulaire (2) dont une extrémité est destinée à être raccordée à la conduite de dérivation et dont l'autre extrémité est destinée à être insérée dans un orifice de raccordement percé dans la conduite principale (1), ladite extrémité étant pourvue d'une collerette externe (3) pour retenir un joint d'étanchéité annulaire (4), une coquille (5) montée coulissante sur le corps (2) et destinée à venir s'appliquer sur la paroi extérieure de la conduite principale (1), et une bague de serrage (6) vissée sur le corps (2) et agissant sur la coquille (5) pour assurer la compression du joint (4) autour de l'orifice de raccordement percé dans la conduite principale (1), **caractérisé en ce que** le diamètre extérieur (D1) de l'extrémité du corps tubulaire (2) destinée à être insérée dans l'orifice de raccordement percé dans la conduite principale (1) est au plus égal au diamètre intérieur (D2) de la coquille (5) .

2. Raccord selon la revendication 1, **caractérisé en ce que** la coquille (5) est nervurée intérieurement et vient s'appliquer sur le joint (4) par l'intermédiaire de deux nervures annulaires distinctes et espacées l'une de d'autre (9, 10).

3. Raccord selon la revendication 2, **caractérisé en ce que** la nervure annulaire (9) située le plus à l'intérieur est chanfreinée et applique le joint (4) contre l'arête d'intersection entre la paroi extérieure de la conduite principale (1) et son orifice de raccordement.

4. Raccord selon la revendication 2 ou 3, **caractérisé en ce que** le joint d'étanchéité (4) est pourvu, au niveau du point d'appui de la nervure annulaire (10) située le plus à l'extérieur, d'une lèvre (11) venant s'appliquer contre la paroi extérieure de la conduite principale (1).

5. Raccord selon l'une quelconque des revendications 1 à 4, **caractérisé en ce qu'**il est prévu au moins une butée (12) pour limiter l'effort de compression exercé sur le joint (4) par la coquille (5).

6. Raccord selon la revendication 5, **caractérisé en ce que** la butée (12) est prévue sur le corps (2) et coopère avec la bague de serrage (6) pour bloquer sa rotation après une course prédéterminée.
